# EUROPÄISCHE PATENTANMELDUNG

(11) **EP 0 704 991 A1**
(43) Veröffentlichungstag der Anmeldung: **03.04.1996**
(21) Anmeldenummer: 95202562.5
(22) Anmeldetag: 22.09.1995
(51) Int. Cl.: H04B 7/26

(54) **Synchronisation von zentralen Funkeinrichtungen**

(30) Priorität: 28.09.1994 DE 4434552
(71) Anmelder: Philips Patentverwaltung GmbH, D-22335 Hamburg (DE); PHILIPS ELECTRONICS N.V., NL-5621 BA Eindhoven (NL)
(72) Erfinder: Grauel, Christoph, Dr., c/o Philips, D-22335 Hamburg24 (DE)
(74) Vertreter: Walz, Erich

(57) **Zusammenfassung**

Die Erfindung betrifft ein Funkübertragungssystem mit mindestens einer ersten zentralen Funkeinrichtung (MTG1, .., MTGn) und mit mindestens einer weiteren zentralen Funkeinrichtung (STG1, .., STGm).

Um auf einfache und kostengünstige Weise eine Synchronisation der ersten und der weiteren zentralen Funkeinrichtungen sicherzustellen wird vorgeschlagen, daß die erste zentrale Funkeinrichtung (MTG1, .., MTGn) einen Zeitzeichensender (ST) zur Aussendung eines Zeitbezugs (S) zur Synchronisation der weiteren zentralen Funkeinrichtung (STG1, .., STGm) aufweist.

## Beschreibung

Die Erfindung betrifft ein Funkübertragungssystem mit mindestens einer ersten zentralen Funkeinrichtung und mit mindestens einer weiteren zentralen Funkeinrichtung.

Die Erfindung betrifft weiter eine zentrale Funkeinrichtung für ein Funkübertragungssystem mit mindestens einer ersten zentralen Funkeinrichtung und mit mindestens einer weiteren zentralen Funkeinrichtung.

Moderne Mobilfunksysteme bestehen in der Regel aus vielen einzelnen Funkzellen, wobei jede Zelle beispielsweise von einer zentralen Funkeinrichtung, einer sogenannten Basis- oder Feststation funktechnisch versorgt wird. Dabei kann die Sendeleistung der Feststationen sowie der beweglichen Teilnehmerstationen an die jeweilige Größe einer Funkzelle angepaßt werden. Für die Mobilfunkversorgung in Ballungsräumen kann die Notwendigkeit bestehen, komplexere Netzstrukturen zu verwenden, um beispielsweise die in Zellularmobilfunkssystemen bestehenden Gleichkanalstörungen zu minimieren. Dabei wird eine Funkzelle nicht, wie bei bisherigen Systemen üblich, von einer zentral angeordneten stationären Funkeinrichtung omnidirektional versorgt, sondern es sind beispielsweise drei räumlich voneinander getrennte zentrale Funkeinrichtungen vorgesehen, die alle auf dem selben Funkkanal arbeiten, und mit dem jeweiligen beispielsweise mobilen Teilnehmergerät gleichzeitig in Verbindung stehen ("Simulcast"-Verfahren). Da eine beispielsweise als mobile Funkeinrichtung ausgebildete Teilnehmerstation nur eine begrenzte Zeitauflösung, beispielsweise beim GSM-System 16 µs aufweist, ist es notwendig, daß die jeweils eine Zelle versorgenden stationären Funkeinrichtungen beispielsweise auf maximal 1 bis 4 µs synchronisiert sind.

Aus DE 41 41 398 C2 ist ein Funkübertragungssystem der eingangs genannten Art bekannt. Dabei ist im Randbereich jeder Zelle mindestens ein Festsender mit mindestens einer Sektorantenne angeordnet, wobei zur Verbesserung der Funkzellenausleuchtung die Festsender benachbarter, unmittelbar an diese Zelle angrenzender Zellen mit der gleichen Kanalgruppe, wie der Festsender der zu versorgenden Zelle selbst, in diese Zelle senden. Die Festsender sind dabei auf eine nicht näher beschriebene Art und Weise miteinander synchronisiert.

Der Erfindung liegt die Aufgabe zugrunde, auf einfache und kostengünstige Weise eine Synchronisation der ersten und der weiteren zentralen Funkeinrichtung sicherzustellen.

Diese Aufgabe wird dadurch gelöst, daß die erste zentrale Funkeinrichtung einen Zeitzeichensender zur Aussendung eines Zeitbezugs zur Synchronisation der weiteren zentralen Funkeinrichtung aufweist.

Dabei übernimmt die erste zentrale Funkeinrichtung als Master die Synchronisation der weiteren zentralen Funkeinrichtungen als Slave dadurch, daß sie über den Zeitzeichensender den Zeitbezug an die weiteren zentralen Funkeinrichtungen aussendet, wobei die weiteren zentralen Funkeinrichtungen die Signale des Zeitzeichensenders empfangen und sich auf die erste zentrale Funkeinrichtung, d.h. ihren Master aufsynchronisieren können. Als Hardwareaufwand ist hierzu bei der ersten zentralen Funkeinrichtung lediglich der Zeitzeichensender notwendig, während bei den weiteren zentralen Funkeinrichtungen keinerlei weitere Hardware erforderlich ist.

Ist zur Aussendung des Zeitbezugs dasselbe Frequenzband vorgesehen, das von den weiteren zentralen Funkeinrichtungen zum Empfang von Funksignalen vorgesehen ist, so kann zur Synchronisation der weiteren zentralen Funkeinrichtung(en) eine herkömmliche Funkeinrichtung verwendet werden, die ja ohnehin die für den Empfang der von den Teilnehmerstationen gesendeten Funksignale notwendigen Einrichtungen aufweist.

Weist das vom Zeitzeichensender gesendete Signal dieselben Eigenschaften - insbesondere bezüglich Modulationsart, Bitrate, Signalformat etc. - auf, wie ein von der weiteren zentralen Funkeinrichtung empfangenes Funksignal, so können zum Empfang des vom Zeitzeichensender ausgesendeten Zeitbezugs die bereits in der weiteren Funkeinrichtung ohnehin vorhandenen Funkeinrichtungen mitverwendet werden, so daß kein weiterer Hardwareaufwand zum Empfang des Signals des Zeitzeichensenders und zur Synchronisation der weiteren Funkeinrichtungen in der Regel nur ein geringer Softwareaufwand nötig ist. Lediglich in der ersten zentralen Funkeinrichtung ist der Zeitzeichensender erforderlich, der das normalerweise von der ersten zentralen Funkeinrichtung abgegebene Downlinksignal (Downlink = Funkrichtung von zentraler Funkeinrichtung an Teilnehmerstationen) in ein Uplinksignal (Uplink = Funkrichtung von den Teilnehmerstationen an die zentrale Funkeinrichtung) umsetzt und dann im sonst für die mobilen Teilnehmer des Funkübertragungssystems bestimmten Downlink sendet. Der Vorteil eines derartigen Funkübertragungssystems besteht darin, daß die weiteren zentralen Funkeinrichtungen wie gewohnt den Uplink abhören können. Da in Funkübertragungssystemen, beispielsweise in GSM-Systemen bereits Algorithmen existieren, mit denen sich eine Teilnehmerstation auf ein empfangenes Downlinksignal aufsynchronisiert, kann in derartigen Systemen somit durch den Zeitzeichensender sichergestellt werden, daß der vom Zeitzeichensender ausgesendete Zeitbezug im Uplink einen festen Zeitbezug zum Sendesignal der ersten zentralen Funkeinrichtung im Downlink aufweist. Bei GSM-Funkübertragungssystemen existiert hierzu bereits ein Regelalgorithmus (Timing Advance), mit dem die zentrale Funkeinrichtung der Teilnehmerstation befiehlt, ihren Zeilbezug so zu verändern, daß die zentrale Funkeinrichtung ihn optimal empfängt.

Eine besonders kostengünstige Realisierung der ersten zentralen Funkeinrichtung und damit des Funkübertragungssystems insgesamt ergibt sich dadurch, daß der Zeitzeichensender eine dritte Funkeinrichtung, insbesondere ein im wesentlichen normales Teilnehmergerät des Funkübertragungssystems ist bzw. ein solches enthält.

Der für den Zeitzeichensender benötigte Hardwareaufwand wird weiter dadurch verringert, daß als Zeitzeichensender ein zum Testen des Funkübertragungssystems ohnehin vorgesehener Prüfsender mitverwendet wird.

Zum Ausgleich von Signallaufzeiten, die durch die Laufzeit des vom Zeitzeichensender gesendeten und von der weiteren Funkeinrichtung empfangenen Zeitbezugs entstehen, ist zwischen dem von der weiteren zentralen Funkeinrichtung empfangenen Zeitbezug und ihrem für die Aussendung von Sendesignalen vorgesehenen Sendezeitbezug ein vorgebbarer Zeitversatz vorgesehen. Je nach den Ausbreitungsverhältnissen in der betreffenden Zelle kann durch eine gezielte Modifikation des Zeitversatzes sogar eine Verbesserung der Gleichkanalsituation erzielt werden.

Eine Verbesserung der Qualität sowie der Geschwindigkeit des Synchronisiervorgangs zwischen der ersten und der weiteren Funkeinrichtung kann dadurch erreicht werden, daß die erste zentrale Funkeinrichtung Mittel zur Aussendung eines Steuersignals aufweist, welches sicherstellt, daß in den Zeiten, in denen der Zeitzeichensender sendet, keine Teilnehmerstationen senden. Dadurch wird erreicht, daß die weiteren zentralen Funkeinrichtungen bei ihrem Synchronisationsvorgang nicht durch Aussendungen sonstiger Teilnehmerstationen gestört werden.

Eine Synchronisation des Zeitzeichensenders auf die erste zentrale Funkeinrichtung kann dadurch erreicht werden, daß die erste und/oder weitere zentrale Funkeinrichtung Mittel zur Aussendung eines Steuersignals an die Teilnehmerstationen aufweist, wobei das Steuersignal zur Veränderung des Zeitbezugs der Teilnehmerstationen auf den Zeitbezug der ersten oder weiteren zentralen Funkeinrichtung vorgesehen ist. Darüberhinaus können interne Laufzeittoleranzen innerhalb des Zeitzeichensenders minimiert werden.

Eine vorteilhafte Aussendung des Zeitbezugs wird dadurch erreicht, daß zur Aussendung des Zeitbezugs durch den Zeitzeichensender ein Zugriffskanal des Funkübertragungssystems vorgesehen ist. Bei einem nach dem GSM-Standart arbeitenden Funkübertragungssystem kann beispielsweise der sogenannte "Access Burst" verwendet werden, der für den Zweck einer Zeitlagenerkennung ohnehin schon optimiert ist.

Im folgenden wird die Erfindung anhand der in den Figuren dargestellten Ausführungsbeispiele näher erläutert.

Es zeigen:
Fig.1 ein erstes Ausführungsbeispiel eines Funkübertragungssystem,
Fig.2 ein weiteres Ausführungsbeispiel eines Funkübertragungssystem und
Fig. 3a und Fig. 3b jeweils ein Flußablaufdiagramm für einen Synchronisationsvorgang.

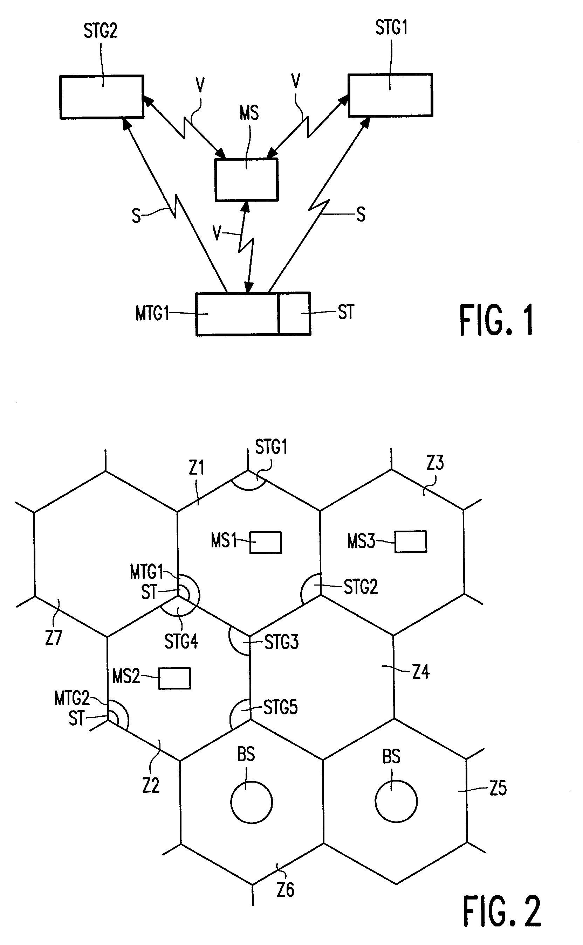

Das in Fig. 1 dargestellte Funkübertragungssystem weist eine erste zentrale Funkeinrichtung MTG 1 (Master Transceiver Group MTG) sowie zwei weitere zentrale Funkeinrichtungen STG 1, STG 2 (Slave transceiver group STG) auf. Im Versorgungsbereich der zentralen Funkeinrichtungen MTG 1, STG 1, STG 2, befindet sich darüberhinaus eine mobile Teilnehmerstation MS. Die erste zentrale Funkeinrichtung MTG1 weist einen Zeitzeichensender ST zur Aussendung eines Zeitbezugs S zur Synchronisation der weiteren zentralen Funkeinrichtung STG1, STG2 auf. Dabei wird zur Aussendung des Zeitbezugs S dasselbe Frequenzband verwendet, das von der weiteren zentralen Funkeinrichtung STG1, STG2 zum Empfang von zwischen den zentralen Funkeinrichtungen MTG1, STG, STG2 über einen Duplexübertragungskanal übertragenen Funksignalen V vorgesehen ist. Das vom Zeitzeichensender ST gesendete Signal weist dieselben Eigenschaften auf, wie ein von der weiteren zentralen Funkeinrichtung von den Teilnehmerstationen (MS) empfangenes Funksignal V.

Das in Fig. 1 dargestellte Prinzipschaltbild eines Funkübertragungssystems kann beispielsweise der Bestandteil einer Zelle eines Mobilfunksystems sein, das inbesondere in Ballungszentren Verwendung finden kann. Im Gegensatz zu bisher üblichen Funkzellen, die in der Regel von einer zentral angeordneten zentralen Funkeinrichtung omindirektional versorgt wurden, besteht das in Fig. 1 dargestellte Funkübertragungssystem aus den drei räumlich von einander getrennten Funkeinrichtungen MTG 1, STG 1, STG 2, wobei die zentralen Funkeinrichtungen MTG 1, STG 1, STG 2 jeweils mit 120° Sektorantennen in die Mitte der aus diesen zentralen Funkeinrichtungen gebildeten Zelle strahlen. Alle drei zentralen Funkeinrichtungen MTG 1, STG 1, STG 2 arbeiten dabei auf demselben Funkkanal und stehen mit dem Teilnehmergerät MS gleichzeitig in Verbindung ("Simulcast"-Verfahren). Insbesondere in Ballungszentren ergeben sich durch die Anordnungen derartiger Sektorantennen für die Verbindungsqualität im Funkübertragungssystem folgende Vorteile:
- geringere Störaussendung in die Nachbarzellen, die aus Gründen der Übersichtlichkeit in Fig. 1 nicht dargestellt sind,
- verbesserte Empfangsverhältnisse und Sendeverhältnisse der Mobilstation bei Abschattung und
- Einsatz von geringeren Sendeleistungen bei gleicher Zellengeometrie.

Der zweite Vorteil wird insbesondere dann relevant, wenn die Verbindung zwischen der Mobilstation MS und einer der zentralen Funkeinrichtungen MTG 1, STG 1, STG 2 temporär abgeschattet wird, denn in diesem Fall können die beiden übrigen Funkeinrichtungen die Verbindung, anders als bei sonst üblichen Handover-Verfahren, unterbrechungsfrei weiterführen (Makro-Diversity). Der dritte Vorteil der in Fig. 1 dargestellten Zellenstruktur besteht darin, geringere Sendeleistungen zu benötigen, was insbesondere bei tragbaren Teilnehmergeräten wegen der stets beschränkten Batteriekapazität von wesentlichem Vorteil ist.

Voraussetzung für ein Funktionieren des in Fig. 1 dargestellten Funkübertragungssystem ist es, daß das Teilnehmergerät MS in der Lage ist, die Signale von mehreren zentralen Funkeinrichtungen MTG 1, STG 1, STG 2 gleichzeitig zu verarbeiten, ohne daß sich diese Signale unzulässig gegenseitig stören. Darüberhinaus müssen die zentralen Funkeinrichtungen MTG 1, STG 1, STG 2 streng synchron zueinander arbeiten, wobei dies nicht nur die verwendeten Sende- und Empfangsfrequenzen betrifft, sondern auch den Zeitbezug der zu übertragenden Nachrichten.

Bei modernen Mobilfunkgeräten, beispielsweise bei Teilnehmergeräten für Mobilfunksysteme die nach dem GSM-Standard arbeiten, wird die erst genannte Forderung automatisch erfüllt. Denn ein Mobilfunksystem, das nach dem GSM-Standard arbeitet, ist in der Lage eine Mehrwegeausbreitung von Funksignalen mit bis zu 16 µs Laufzeitunterschied ("Delay Spread") und mit einigen hundert Hertz Frequenzversatz mit definierter Übertragungsqualität zu toleriern. Hintergrund dieser Spezifikation ist die Tatsache, daß insbesondere in Ballungsgebieten die Funkversorgung nicht nur auf einem direkten Pfad ("Line of sight") erfolgt, sondern oft noch zusätzlich - an bestimmten Orten sogar ausschließlich - über Refektionen an größeren Hindernissen, wie beispielsweise Hochhäusern erfolgt, so daß der jeweilige Empfänger der Teilnehmerstation nicht nur ein einzelnes Signal empfängt, sondern mehrere, die gegeneinander unterschiedliche Verzögerungen entsprechend den Umwegen sowie Frequenzverschiebungen (= Dopplereffekt) aufweisen. Bei einem Funkübertragungssystem mit digitaler Übertragungstechnik, wie dies beispielsweise bei einem nach dem GSM-Standard arbeitenden Mobilfunksystem der Fall ist, kann beispielsweise mittels eines Equalizers eine Kompensation dieser Effekte ermöglicht werden. Diese Kompensationsmöglichkeit läßt sich bei dem in Fig. 1 dargestellten Funkübertragungssystem direkt ausnutzen, da die Signale V, die von den drei zentralen Funkeinrichtungen MTG 1, STG 1, STG 2 über drei verschiedene Pfade an die Teilnehmerstation MS ausgesendet werden von der Teilnehmerstation MS selbst nicht anders empfangen und verarbeitet werden, als ein Signal einer einzigen Funkeinrichtung, das beispielsweise durch Mehrwegeausbreitung als mehrere Signalabbilder des ausgesendeten Signals empfangen wird. Zum besseren Verständnis des in Fig. 1 dargestellten Funkübertragungssystem sei noch erwähnt, daß beispielsweise bei einem nach dem GSM-Standard arbeitenden Funkübertragungssystem die erste zentrale Funkeinrichtung MTG 1 sowie die weiteren zentralen Funkeinrichtungen STG 1, STG2 alle zusammengenommen eine sogenannte Basisstation, in GSM-Ausdrucksweise eine sogenannte Base Transceiver Station BTS bilden.

Die weiter oben genannte Voraussetzung, daß die zentralen Funkeinrichtungen miteinander synchronisiert sind, basiert darauf, daß die Teilnehmerstationen nur eine begrenzte Zeitauflösung, beispielsweise die genannten 16 µs aufweisen. Eine derartige begrenzte Zeitauflösung der Teilnehmerstation MS macht es erforderlich, daß eine Teilnehmerstation MS, die sich an einen beliebigen Ort innerhalb einer Zelle befindet, alle drei Signale innerhalb ihres Zeitfensters empfängt. Da hierbei je nach Standort unterschiedliche Entfernungen zu den zentralen Funkeinrichtungen MTG 1, STG 1, STG 2 und zu dem pro Sender noch die Streuung von Signallaufzeiten durch die Streuung von Signallaufzeiten durch Reflektionen gegeben sind, muß die Synchronisation der zentralen Funkeinrichtungen MTG 1, STG 1, STG 2 auf wenige µs genau erfolgen, beispielsweise wird im folgenden von einer Zeittoleranz von maximal 1 - 4 µs auszugehen sein.

Die Synchronisation der zwei weiteren zentralen Funkeinrichtungen STG 1, STG 2 kann bei dem in Fig. 1 dargestellten Mobilfunksystem auf einfache Weise dadurch erfolgen, daß die erste zentrale Funkeinrichtung MTG 1 einen Zeitzeichensender ST aufweist, der einen Zeitbezug S zur Synchronisation der weiteren zentralen Funkeinrichtungen aussendet. Die erste zentrale Funkeinrichtung MTG 1 ("Master transceiver group MTG") übernimmt somit bezüglich der Synchronisation der weiteren Funkeinrichtung STG 1, STG 2 die Rolle des Masters, d.h. sie sendet ihre Signale V unbeeinflußt von den übrigen weiteren Funkeinrichtungen STG 1, STG 2. Die beiden weiteren zentralen Funkeinrichtunen hingegen müssen sich auf die erste zentrale Funkeinrichtung MTG 1 aufsynchronisieren und werden daher als sogenannte "Slave transceiver group" STG 1 und STG 2 bezeichnet.

Die Synchronisierung der zentralen Funkeinrichtungen STG 1, STG 2, erfolgt dabei sinnvoller Weise über Funksignale, die in dem Frequenzband liegen, welches dem betreffenden Funkdienst sowieso zugewiesen ist. Hierdurch entfällt zusätzlicher Aufwand wie separate Richtfunkstrecken oder getrennt zu verlegende Kabel. Dabei wird unterstellt, daß die in einem Funkübertragungssytem immer auch verwendeten terrestrischen Übertragungswege zwischen den zentralen Funkeinrichtungen die Anforderungen hinsichtlich der oben genannten zulässigen Zeittoleranzen nicht erfüllen, da ihre Wegeführung in aller Regel nach ganz anderen Gesichtspunkten optimiert ist.

Eine Möglichkeit bestünde nun darin, daß die weiteren zentralen Funkeinrichtungen STG 1, STG 2 direkt das von der ersten zentralen Funkeinrichtung MTG 1 auch an die Teilnehmerstationen MS ausgesendete Signal V abhören würden. Zum Empfang eines derartigen Signals müßten die weiteren zentralen Funkeinrichtungen STG 1, STG 2, dann jeweils einen zusätzlichen Empfänger aufweisen, da die erste zentrale Funkeinrichtung MTG 1 das Signal V an die Teilnehmerstationen MS ja lediglich in der Downlink-Senderichtung aussenden, d.h. von der ersten zentralen Funkeinrichtung MTG 1 in Richtung der Teilnehmerstationen MS und die weiteren zentralen Funkeinrichtungen STG 1, STG 2 die von den Teilnehmerstationen MS abgesendeten Signale V ja lediglich in der sogenannten Uplink-Senderichtung, d.h. von der Teilnehmerstation MS an die zentralen Funkeinrichtungen MTG 1, STG 1, STG 2 empfangen. Damit die weiteren zentralen Funkeinrichtungen STG 1, STG 2 ein von der ersten zentralen Funkeinrichtung MTG 1 abzusendendes Synchronisationssignal empfangen könnten, müßten sie daher jeweils einen separaten Empfänger aufweisen, der zum Empfang eines Downlink-Signals geeignet wäre. Dies würde jedoch einen erheblichen Hardware-Mehraufwand bedeuten.

Bei dem in Fig. 1 dargestellten Funkübertragunssystem werden die oben genannten Nachteile dadurch umgangen, daß die weiteren zentralen Funkeinrichtungen STG 1, STG 2 nicht das normale Downlink-Signal V der ersten zentralen Funkeinrichtung MTG 1 empfangen, sondern ein daraus abgeleitetes Signal, welches in ein für sie ohnehin empfangbares Uplink-Signal übertragen wird. Dieses Uplink-Signal enthält die Information des Zeitbezugs S zur Synchronisation der weiteren zentralen Funkeinrichtungen STG 1, STG 2. Hierzu dient ein lediglich in der ersten zentralen Funkeinrichtung MTG 1 vorgesehener Zeitzeichensender ST der beispielsweise als reguläres Teilnehmergerät ausgebildet sein kann. Diesem Zeitzeichensender ST wird das Downlink-Signal V der ersten zentralen Funkeinrichtung MTG 1 zugeführt, beispielsweise empfängt der Zeitzeichensender wenn er als reguläres Teilnehmergerät ausgebildet ist, das von der ersten zentralen Funkeinrichtung MTG 1 ausgesendete Downlink-Signal V. Nach Empfang dieses Downlink-Signals, synchronisiert sich der Zeitzeichensender ST in bestimmter Weise, wie es beispielsweise vom Standard des Funkübertragungssystems vorgeschrieben wird, auf dieses Signal auf und paßt so seinen eigenen Sendezeitbezug bezüglich der Aussendung des Sendezeitbezugs S an den der ersten zentralen Funkeinrichtung MTG 1 an. Der Zeitzeichensender ST sendet dann den Zeitbezug S wie gewünscht im Uplink, synchron zur ersten zentralen Funkeinrichtung MTG 1.

Bei Funkübertragungssystemen, die nach dem GSM-Standard arbeiten, kann für die Auswertung von Zeitbezügen beispielsweise der sogenannte Access Burst verwendet werden, der ein gegenüber normalen Nachrichten verändertes Format mit verlängerter Synchronisationssequenz aufweist. Normalerweise werden mit diesem Signal typischer Weise alle Zugriffe der Mobilstation MS auf das Mobilfunkübertragungssystem eingeleitet. Die einzig notwendige Änderung einer derartigen Mobilstation-Funktion für die Anwendung als Zeitzeichensender ST liegt darin, daß eine derartige Mobilstation (= Zeitzeichensender ST) einen derartigen Access Burst z.B. in regelmäßigen Abständen sendet. Eine Möglichkeit, dies zu provozieren besteht beispielsweise darin, daß die ersten zentrale Funkeinrichtung MTG 1 in bestimmten Zeitabständen den Zugriff für alle normalen Teilnehmerstationen MS sperrt und nur für eine besondere Klasse, nämlich gerade für die Aussendung des Zeitzeichenbezugs S für den Zeitzeichensender ST freigibt. Eine derartige kontinuierliche Aussendung des Zeichensenders ST kann bei einer konventionellen Mobilstation, die als Zeitzeichensender ST Verwendung findet, dadurch realisiert werden, daß lediglich ein geringfügiger Softwareaufwand notwendig ist, weitere Hardware wird überhaupt nicht benötigt. Für die Funktion des Zeitzeichensenders ST können somit weitestgehend die normalen Eigenschaften eines handelsüblichen Teilnehmergeräts, d.h. eines Massenprodukts ausgenutzt werden, womit ein erheblicher Volumen- und Kostenvorteil verbunden ist. Weiterhin ist der Zusatzaufwand eines derartigen Zeitzeichensenders ST nur einmal pro Zelle zur Ergänzung der ersten zentralen Funkeinrichtung MTG 1 zu leisten und nicht, wie bei anderen Lösungsmöglichkeiten an jeder weiteren zentralen Funkeinrichtung STG 1, STG 2.

Ein weiterer Vorteil des Einsatzes einer normalen Teilnehmerstation als Zeitzeichensender ST liegt darin, daß sich ein derartiger Zeitzeichensender ST auch noch für andere Zwecke ausnutzen läßt. Hierzu besteht ein gängiges Verfahren beispielsweise darin, mit Hilfe einer aus einer regulären Teilnehmerstation gebildeten Zusatzeinrichtung Prüfschleifen auf definierten Funkkanälen zu schalten, um so die Funktionsfähigkeit der zentralen Funkeinrichtungen MTG 1, STG 1, STG 2 zu überprüfen. Neben der in der Erfindung vorgeschlagenen Zeitzeichensender - Funktion des Zeitzeichensenders ST kann somit mit einem derartigen konventionellen Teilnehmergerät auch eine Prüfschleife realisiert werden.

Fig. 2 zeigt ein weiteres Ausführungsbeispiel eines Funkübertragungssystems. Das in Fig. 2 dargestellte Funkübertragungssystem besteht aus einer Vielzahl von einzelnen Funkzellen, von denen in Fig. 2 lediglich sieben Zellen Z1, .., Z7 dargestellt sind. Die Zellen Z1 und Z2 sind jeweils nach dem in Fig. 1 dargestellten Grundprinzip aufgebaut. So weist die Zelle Z1 eine erste zentrale Funkeinrichtung MTG 1 mit einem Zeitzeichensender ST sowie weitere zentrale Funkeinrichtungen STG 1 und STG 2 auf. Die zweite Funkzelle Z2 weist neben einer ersten zentralen Funkeinrichtung MTG 2 mit einem Zeitzeichensender ST drei weitere zentrale Funkeinrichtungen STG 3, STG 4, STG 5 auf. Die Funkzellen Z1 und Z2 versorgen beispielsweise Ballungsräume einer Großstadt, während die Funkzellen Z5 und Z6 in herkömmlicher Weise von einer zentral angeordneten stationären Funkeinrichtung BS omnidirektional versorgt werden. Aus Gründen der Übersichtlichkeit wurden die Einrichtungen zur Versorgung der Zellen Z3, Z4 und Z7 ind Fig. 2 nicht eingezeichnet. Eine Versorgung dieser Zellen kann nach dem Prinzip des in Fig. 1 dargestellten "Simulcast"-Verfahren erfolgen (vgl. Zellen Z1, Z2) und/oder entsprechend einer omnidirektionalen Funkversorgung entsprechend den Funkzellen Z5 und Z6. In dem in Fig. 2 dargestellten Funkübertragungssystem bewegen sich mobile Teilnehmerstationen MS 1, MS 2, MS 3.

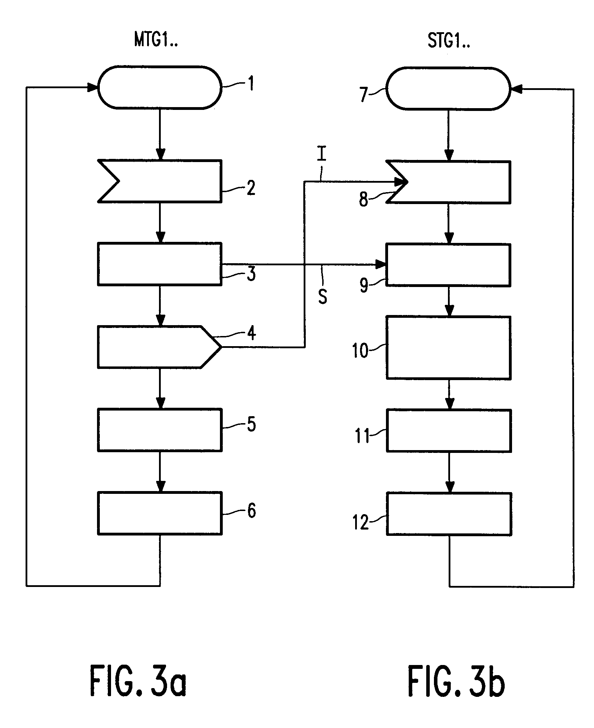

Fig. 3a zeigt einen möglichen Synchronisationsablauf aus Sicht der ersten zentralen Funkeinrichtung MTG 1. Hierzu verläßt die erste zentrale Funkeinrichtung MTG 1 ihren Grundzustand 1 und veranlaßt im Block 2 in regelmäßigen Abständen, d.h. beispielsweise alle X sec einen Synchronisationsvorgang. Hierzu sperrt die erste zentrale Funkeinrichtung MTG 1 vorübergehend den Zugriff aller regulären Teilnehmerstationen MS in dem für Zugriffe vorgesehenen Kanal. Lediglich der Zeitzeichensender ST erhält ein Zugriffsrecht und sendet im Block 3 daraufhin kontinuierlich den Zeitbezug S, bei einem nach dem GSM-Standard arbeitenden Funkübertragungssytsem beispielsweise den sogenannten "Access Burst" an die weiteren zentralen Funkeinrichtungen STG 1.. in diesem Kanal. Die erste zentrale Funkeinrichtung MTG 1 veranlaßt nun mittels des Synchronisationsbefehl I im Block 4 auf separaten Wege, beispielsweise über die ohnehin terrestrischen Leitungen zwischen erster zentraler Funkeinrichtung MTG 1 und weiteren zentralen Funkeinrichtungen STG 1 .. die weiteren zentralen Funkeinrichtungen STG 1 .. zu einem Synchronisationsvorgang, wobei dies eine zeitlich unkritische Signalisierung ist. Anschließend bleibt die erste zentrale Funkeinrichtung MTG 1 im Block 5 eine verabredete Zeit y in diesem Zustand und gibt so den weiteren zentralen Funkeinrichtungen Gelegenheit sich aufzusynchronisieren. Anschließend wird im letzten Block 6 des in Fig. 3a dargestellten Flußablaufdiagramms der Zugriff für den Zeitzeichensender ST wieder gesperrt und der Zugriff für die regulären Teilnehmerstationen wieder freigegeben.

Fig. 3b zeigt den Synchronisationsvorgang aus Sicht der weiteren zentralen Funkeinrichtungen STG 1 ... Hierzu haben die weiteren zentralen Funkeinrichtungen STG 1 ... die Aufgabe, in bestimmten Zeitabständen zu überprüfen, ob ihr eigener Zeitbezug, mit dem sie die Signale senden und empfangen, noch synchron mit dem der ersten zentralen Funkeinrichtung MTG 1 ... ist, um gegebenenfalls ihren eigenen Zeitbezug korrigieren zu können. Sobald die weitere zentrale Funkeinrichtung STG 1 aus ihrem Grundzustand 7 heraus den Synchronisationsbefehl I von der ersten zentralen Funkeinrichtung MTG 1 erhalten hat, leitet sie im Block 8 einen Synchronisationsvorgang ein. Sie schaltet hierzu im Block 9 einen ihrer regulären Empfänger auf den vorher verabredeten Zeitzeichenkanal, auf dem der Zeitzeichensender ST der ersten zentralen Funkeinrichtung MTG 1 sendet und mißt im Block 10 aus dem empfangen Zeitzeichenbezug S den Zeitversatz T zwischen dem empfangenen Zeitzeichenbezug S und dem eigenen Referenzbezug, mit dem die weitere zentrale Funkeinrichtung STG 1 ihre Signale sendet und empfängt. Im nächsten Schritt 11 korrigiert die weitere zentrale Funkeinrichtung STG 1 .. ihren eigenen Referenzbezug um den ermittelten Zeitversatz T. Stellt die weitere zentrale Funkeinrichtung STG 1 dabei fest, daß der vom Zeitzeichensender ST ausgesendete Zeitzeichenbezug S um einen Betrag T später als erwartet eintrifft, so muß sie ihren eigenen Zeitbezug um genau diesen Zeitversatz T verzögern. Im Falle des zu frühen Eintreffens muß sie ihren internen Referenzbezug entsprechend vorverlegen. Um die Signallaufzeiten zwischen erster zentraler Funkeinrichtung MTG 1 und weiteren zentralen Funkeinrichungen STG 1 ... auszugleichen, ist es sinnvoll, den Korrekturwert des Zeitversatzes T um einen festen Wert, der von der Entfernung zwischen erster zentraler Funkeinrichtung MTG 1 und weiterer zentralen Funkeinrichtung STG 1 abhängt, zu modifizieren. Abschließend wird der Empfänger der weiteren zentralen Funkeinrichtung STG 1 im Block 12 wieder für den Empfang der regulären Verbindung freigegeben und die weitere zentrale Funkeinrichtung STG 1 kehrt in ihren Grundzustand zurück.

Die durch das "Ausborgen" des regulären Empfängers der weiteren zentralen Funkeinrichtungen STG 1 .. für den Synchronisierungsvorgang möglicherweise verursachte kurzzeite Unterbrechung fällt wegen der Kürze ihrer Dauer kaum ins Gewicht. Darüberhinaus läßt sich durch eine Optimierung der Kanalzuteilungsstratgie diesbezüglich auch noch eine Verbesserung erzielen.

## Patentansprüche

1. Funkübertragungssystem mit mindestens einer ersten zentralen Funkeinrichtung (MTG1, .., MTGn) und mit mindestens einer weiteren zentralen Funkeinrichtung (STG1, .., STGm), dadurch gekennzeichnet,
daß die erste zentrale Funkeinrichtung (MTG1, .., MTGn) einen Zeitzeichensender (ST) zur Aussendung eines Zeitbezugs (S) zur Synchronisation der weiteren zentralen Funkeinrichtung (STG1, .., STGm) aufweist.

2. Funkübertragungssystem nach Anspruch 1,
dadurch gekennzeichnet,
daß zur Aussendung des Zeitbezugs (S) dasselbe Frequenzband vorgesehen ist, das von der weiteren zentralen Funkeinrichtung (STG1, ..,STGm) zum Empfang von Funksignalen (V) vorgesehen ist.

3. Funkübertragungssystem nach einem der Ansprüche 1 oder 2,
dadurch gekennzeichnet,
daß das vom Zeitzeichensender (ST) gesendete Signal dieselben Eigenschaften aufweist, wie ein von der weiteren zentralen Funkeinrichtung (STG1, ..,STGm) von Teilnehmerstationen (MS) empfangenes Funksignal (V).

4. Funkübertragungssystem nach einem der Ansprüche 1 bis 3,
dadurch gekennzeichnet,
daß der Zeitzeichensender (ST) eine dritte Funkeinrichtung, insbesondere ein im wesentlichen normales Teilnehmergerät (MS) des Funkübertragungssystems enthält.

5. Funkübertragungssystem nach einem der Ansprüche 1 bis 4,
dadurch gekennzeichnet,
daß zwischen dem von der weiteren zentralen Funkeinrichtung (STG1, ..,STGm) empfangenen Zeitbezug (S) und ihrem für die Aussendung von Sendesignalen vorgesehenen Sendezeitbezug ein vorgebbarer Zeitversatz vorgesehen ist.

6. Funkübertragungssystem nach einem der Ansprüche 1 bis 5,
dadurch gekennzeichnet,
daß die erste zentrale Funkeinrichtung (MTG1, .., MTGn) Mittel zur Aussendung eines ersten Steuersignals aufweist, welches sicherstellt, daß in den Zeiten, in denen der Zeizeichensender (ST) sendet, keine Teilnehmerstationen (MS) senden.

7. Funkübertragungssystem nach einem der Ansprüche 1 bis 6,
dadurch gekennzeichnet,
daß die erste (MTG1, .., MTGn) und/oder weitere (STG1, ..,STGm) zentrale Funkeinrichtung Mittel zur Aussendung eines zweiten Steuersignals an die Teilnehmerstationen (MS) aufweist, wobei das zweite Steuersignal zur Veränderung des Zeitbezugs der Teilnehmerstationen (MS) auf den Zeitbezug der ersten (MTG1, .., MTGn) oder weiteren (STG1, ..,STGm) zentralen Funkeinrichtung vorgesehen ist.

8. Funkübertragungssystem nach einem der Ansprüche 1 bis 7,
dadurch gekennzeichnet,
daß zur Aussendung des Zeitbezugs (S) durch den Zeitzeichensender (ST) ein Zugriffskanal des Funkübertragungssystems vorgesehen ist.

9. Zentrale Funkeinrichtung (MTG1, .., MTGn, STG1, ..,STGm) für ein Funkübertragungssystem mit mindestens einer ersten zentralen Funkeinrichtung (MTG1, .., MTGn) und mit mindestens einer weiteren zentralen Funkeinrichtung (STG1, .., STGm),
dadurch gekennzeichnet,
daß die erste zentrale Funkeinrichtung (MTG1, .., MTGn) einen Zeitzeichensender (ST) zur Aussendung eines Zeitbezugs (S) zur Synchronisation der weiteren zentralen Funkeinrichtung (STG1, .., STGm) aufweist.

10. Funkeinrichtung (ST) für ein Funkübertragungssystem mit mindstens einer ersten zentralen Funkeinrichtung (MTG1, .., MTGn) und mit mindestens einer weiteren zentralen Funkeinrichtung (STG1, .., STGm),
dadurch gekennzeichnet,
daß die Funkeinrichtung (ST) als Zeitzeichensender zur Aussendung eines Zeitbezugs (S) zur Synchronisation der weiteren zentralen Funkeinrichtung (STG1, .., STGm) vorgesehen ist.
